# EUROPEAN PATENT SPECIFICATION

(11) **EP 4 007 738 B1**
(45) Date of publication and mention of the grant of the patent: **19.03.2025**
(21) Application number: 20764479.0
(22) Date of filing: 30.07.2020
(51) Int. Cl.: G05D 7/01

(54) **WATER TREATMENT CARTRIDGE**
WASSERBEHANDLUNGSKARTUSCHE
CARTOUCHE DE TRAITEMENT DE L'EAU

(30) Priority: 01.08.2019 CN 201921241537 U; 01.08.2019 US 201962881667 P
(43) Date of publication of application: 08.06.2022
(73) Proprietor: Strauss Water Ltd, 6037601 Or Yehuda (IL)
(72) Inventor: WILDER, Haim, 4355504 Ra'anana (IL); ALMISHALI, Liron, 4922082 Petach Tikva (IL); SANDORI-KAZAZ, Haya, 7070000 Gedera (IL); KUKS, Evgenia Liel (Jeny), 5225513 Ramat Gan (IL)
(74) Representative: Hertin und Partner Rechts- und Patentanwälte PartG mbB
(86) International application number: PCT/IL2020/050843
(87) International publication number: WO 2021/019541

(56) References cited:
- EP-A1- 3 274 066
- KR-B1- 101 151 509
- US-A- 4 976 283
- US-B1- 6 287 456
- US-B2- 8 167 141

## Description

### TECHNOLOGICAL FIELD

The present disclosure concerns water treatment cartridges, in particular gravitational flow treatment cartridges.

### BACKGROUND

Water treatment and/or filtering devices are typically utilized for treating source water (*e.g*. running water, well-water, river or lake water, *etc.*) into potable, drinkable water. Such devices typically contain various water filtering and/or treating media, throughwhich the source water is passed, such that various contaminants are removed from the source water to obtain potable water.

In water supply systems that are based on pressurized water feeds, the water is forced through the filtering/treating device, and hence outflow of the potable water from the device is typically unhindered, as long as sufficient water pressure is maintained. However, when the source water feed is not pressurized, a gravitational-based device needs to be used. Such devices have typically an upper inlet and a bottom outlet, such that the water flow between the inlet and the outlet (through the treatment media) is carried out gravitationally.

One of the common problems of various gravitational-filtering devices is the initialization stage of utilizing the device; namely, as the media within the device is typically a porous, dry (before water is introduced) medium - once water is introduced therein, the initial flow of water into the device is hindered by air bubbles existing within the filtering/treatment medium. This, in turn, causes slow and uneven outflow of water from the device until all of the filtering/treatment media is soaked with water and no more air resides in the device. Some relevant prior art documents are KR 101 151 509 B1, EP 3 274066 A1, US 8 167 141 B2, US 6 287 456 B1, US 4 976 283 A.

### GENERAL DESCRIPTION

The present disclosure provides water treatment cartridges having a structure that minimizes the time required for initiation of the cartridge and provide a steady outflow of potable/treated water. Although the cartridge is designed to be used in gravitational filtering, it is appreciated that the cartridge can also be used in systems based on pressurized water feed. The essential features of the invention are set out in independent apparatus claims 1, 12, 14 and in independent method claim 13. Further, preferred embodiments are described in dependent claims 2-11.

In one of its aspects, the present disclosure provides a water treatment cartridge that comprises a housing, defining therein a water treatment space and having a longitudinal axis. The housing comprises one or more water inlets at a top portion of the housing and a water outlet at a bottom wall of the housing, the one or more water inlets and the water outlet defining a water flow path therebetween. An internal wall circumferring the water outlet extends upwardly from the bottom wall of the housing into the water treatment space to define a lumen. The internal wall terminates at an apex, the apex being at a lower level than the one or more water inlets to permit water flow from the inlet to the outlet through the treatment space. The cartridge further comprises a flow restriction element that is fitted at a bottom portion of the lumen, and having a water ingress substantially corresponding in dimensions to the bottom portion of the lumen, and a water egress having dimensions substantially smaller than the water ingress.

At the initial feed of source water into the cartridge, water will flow through the inlet(s) into the treatment media and partially wet it. Potable/treated water will then trickle into the lumen. Due to the narrowing of the outlet formed by the difference in dimensions between the ingress and the egress of the flow restriction element, treated water will accumulate within the lumen; once a sufficient water column is formed, a steady stream of treated water will flow out of the cartridge as long as the height of the water column within the lumen is maintained. Thus, the flow restriction element enables obtaining a steady flow of treated water out of the cartridge already at the initial stages of usage (*i.e.* at the "initiation" of the cartridge). Once all of the treatment media is saturated with water and a constant water column is obtained within the lumen, the flow restriction element enables obtaining a smooth uninterrupted outflow of treated water from the cartridge.

The term *treated water* (or potable water) is meant to denote water which have been treated by passing through one or more treatment media, that removes or adds various components from/to the water.

It should be noted that the terms *top, bottom, horizontal* and any other directional-based designations used herein are given for convenience only for the providing a frame of reference to describe relative position and orientation of the cartridge's components. During gravitational treatment of water, the "top" will face upwards, the "bottom" downwards. However, in other modes of use and/or other embodiments, the orientation may be different, *e.g.* in the case of a cartridge used in pressurized--water systems.

The term *dimensions* typically refers to the diameter of the outlet, ingress and/or egress when the cross section of these is circular. For other geometries, *e.g*. oval, polygonal, *etc.,* the term is meant to refer to the largest dimension (an equivalent diameter). In some embodiments, each of the outlet, ingress and egress have a circular cross-sectional shape.

As noted, the dimensions of the egress are substantially smaller than the dimensions of the ingress in order to form said water column within the lumen. Thus, in some embodiments, the egress has a diameter that is at least 10%, at least 20%, at least 25%, at least 30%, at least 40% or even at least 50% smaller than the diameter of the ingress.

According to the invention, the flow restriction element has a conical or frustoconical cross-sectional shape, *i.e.* having an inwardly-slanted wall linking the ingress and the egress.

In other solutions, not forming part of the invention, the flow restriction element is mechanically fitted into the bottom portion of the lumen. Such mechanical fitting may be by any means known in the art, *e.g.* screw-fitting, snap fitting, welding, adhering, *etc.* In a particular embodiment, the flow restriction element is snap-fitted into the bottom portion of the lumen.

According to the invention, the flow restriction element is an integral part of the housing, *i.e.* is integrally formed with the internal wall (and/or with the bottom wall).

The one or more water inlets are located at a periphery of the top portion of the housing and the water outlet is located substantially at the center of the bottom wall. The one or more water inlets and the water outlet are configured such that the water flows in a generally lateral direction through the treatment space, *e.g.* in a generally radial direction from the one or more inlets at a top peripheral portion of the housing to a bottom outlet at about the center of a bottom portion of the housing. The term *generally lateral direction* means to denote the fact the flow has typically a curvilinear flow path and, by virtue of the fact that it is gravitational, has typically also a general downward trend and generally horizontal trend that is more pronounced than the vertical one. As the apex of the internal wall is at a level below the water inlet(s), a generally descending flow path will be formed from the inlet(s) to the outlet. Thus, according to an embodiment of this disclosure, the water flows through the cartridge from the peripheral inlets in a generally radial, overall descending (curvilinear) flow path to the cartridge's central outlet.

The water inlets are typically arranged such that the water flows generally uniformly throughout the entire treatment space of the cartridge, such that at least the majority (at time the entire) treatment media participates in the treatment process. In an embodiment, the water inlets may be arranged so as to have a uniform circumferential distribution in the cartridge's periphery. For example, the water inlets may be constituted by a plurality of apertures equidistantly distributed along the periphery of the housing's top wall; *e.g.* may consist of a number (*e.g.* 2, 3, 4, 5, 6, 8 or more) of openings.

In some embodiments, the treatment space is divided into two or more treatment chambers, typically, albeit not exclusively, by one or more closed-loop walls downwardly extending into the treatment space from a top wall of the housing and positioned between an external wall of the housing and said internal wall to divide the treatment space into at least a first treatment chamber and a second treatment chamber. The closed-loop wall(s) typically terminates in a bottom edge that is spaced-apart from the bottom wall of the housing to form a water passage between the first and the second treatment chambers, the closed-loop wall and the internal wall jointly cause the water to flow in a curvilinear flow path from the water inlet to the water outlet.

The closed-loop wall, together with the internal wall, serve as barriers that do not permit the water to flow in a linear path within the treatment space, but rather assume a curvilinear flow path. Such a curvilinear flow path extends (elongates) the residence time of the water within the treatment space by effectively increasing the length of the flow path, thus increasing the exposure of the source water to the treatment media. In some embodiments, the closed-loop wall and the internal wall are concentric, typically coaxial and essentially parallel to the cartridge's longitudinal axis.

By an embodiment, at least one of the first and second treatment chambers can comprise, independently, one or more horizontal divider elements for dividing the treatment chambers into treatment compartments. Such horizontal divider elements are typically perforated or formed out of a mesh, thus permitting flow of water therethrough.

The cartridge described herein is typically designed for the purpose of purifying water, in particular to obtain treated/potable water from source water. According to some embodiments, the treatment space comprises one or more water treatment media. By some exemplary embodiments, each of the treatment chambers (and/or each of the treatment compartments) can comprise same or different treatment media.

In accordance with some embodiments, the treatment medium may comprise components that release a beneficial substance to the water during treatment. Such a substance may be of a nutritional or health value or may have a water disinfecting activity. A specific example of such a substance comprises a halogen (e.g. iodine) or a mineral (e.g. magnesium ions).

By an embodiment, the treatment space can comprise a porous substrate, for examples in the form of a mesh net, granulated or flaked loose material, a porous block, fibers, *etc.* In another embodiment, the treatment media can comprise a sorbing substrate for sorbing substance(s) from the water. In some other embodiments, the treatment media may be one or more hollow-fiber membrane, *e.g*. for removal of microbiological contaminants and/or microplastics.

Examples of water treatment medium may be charcoal, activated carbon, ion exchangers (anionic, cationic, mixed bed, etc.), scaling reduction substances, ion/mineral sources (*e.g*. natural rock salts or synthetic sources), microplastics reducing media, antimicrobial media, etc.

The cartridge may further comprise one or more supplementary treating units, fitted about the egress of the flow restriction element. The supplementary treating unit may be in the form of a container, that is configured for attaching to the egress of the flow restriction element, either permanently or removably. The supplementary treating unit may, by some embodiments, be integrally formed with the flow restriction unit.

In order to permit substantially uniform flow of water existing the cartridge from the narrow egress of the flow restriction unit, the supplementary treating unit may have an inlet that is configured with a flow diffuser, designed to substantially evenly distribute the water flow through the supplementary treating unit.

The supplementary treating unit may comprise one or more water treating media, different or the same as those within the treatment chambers of the cartridge. By an embodiment, the supplementary treating unit comprises one or more hollow-fiber membrane, that is configured for physical removal of various contaminants from the water, typically microorganisms and microplastics. The hollow-fiber membrane may have, for example, a pore size of at least 0.01 µm (micrometers), typically between about 0.01 µm and 0.5 µm. The hollow-fiber membrane may be any suitable hollow-fiber membrane known in the art. Non-limiting examples of suitable hollow-fiber membranes may be various polymeric-based hollow-fibers (*e.g*. polyethylene, polypropylene, polystyrene, Polyvinylidene fluoride (PVDF), polyamide, polymethylmethacrylate (PMMA), acrylonitrile and sodium methallylsulfonate copolymers (*e.g*. AN69), polyacrylonitrile--polyvinylchloride copolymers, *etc*.). The hollow-fibers may be arranged in any suitable form within the supplementary treating unit, for example, parallel to the longitudinal axis of the cartridge, folded or weaved.

According to some embodiments, the cartridge may comprise one or more vent openings configured to release gas (e.g. air) that is entrapped within the cartridge. Such vent openings can be typically formed at a top portion of the cartridge. The vent openings may be fluidically linked to the lumen by a venting duct, thus permitting release of gas bubbles that may be entrapped within the lumen that may hinder water outflow from the cartridge. In other embodiments, the cartridge may comprise at least one bubble release mechanism, which may be passive or active (i.e. may be operated without involvement of the user or requires an action of the user for activation).

As noted above, the flow restriction element is an integral part of the inner wall (or the bottom wall of the housing).

The present invention also relates to a water container that comprises a bottom treated/potable water reservoir with a dispensing outlet; a top source water reservoir; an internal wall separating between the source water reservoir and the treated/potable water reservoir and comprising a cartridge-receiving seat; and a cartridge as defined herein, received in said cartridge-receiving seat, such that the water outlet of the cartridge opens into the potable water reservoir and the one or more water inlets open into the source water reservoir.

The container can be any type of container known *per se, e.g.* a water pitcher.

The invention is also related to a method for gravitationally treating source water into treated/potable water, the method comprising placing a cartridge as described herein into the cartridge-receiving seat of the container described herein; at least partially filling the source water reservoir with source water; and permitting the source water to gravitationally flow through the cartridge into the potable water reservoir.

The invention is also related to a water dispenser comprising a cartridge as disclosed herein.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figs. 1A-1B** are perspective top and bottom views, respectively, of a water treatment cartridge according to an embodiment of this disclosure.
**Fig. 2A** is a longitudinal cross section through a water treatment cartridge according to an embodiment of this disclosure.
**Fig. 2B** is a longitudinal cross section through a water treatment cartridge according to another embodiment of this disclosure, including one or more treatment media.
**Fig. 3** is a longitudinal cross section of the flow restriction element according to an embodiment of this disclosure.
**Fig. 4A-4C** are longitudinal cross sections through water treatment cartridges according to other embodiments of this disclosure.
**Fig. 5A** is a longitudinal cross section through a water treatment cartridge according to another embodiment of this disclosure that includes a hollow-fiber membrane supplementary unit.
**Fig. 5B** is a longitudinal cross section through a water treatment cartridge according to another embodiment of this disclosure that includes another configuration of a hollow-fiber membrane supplementary unit.

### DETAILED DESCRIPTION OF EMBODIMENTS

In the following description, specific embodiments of a cartridge according to the present disclosure will be described. It should be appreciated that the invention is not limited to these embodiments.

The cartridge exemplified herein may be used in gravitational water treating systems (*e.g.* water pitchers) or in pressure-feed water treating systems (*e.g.* water dispensers).

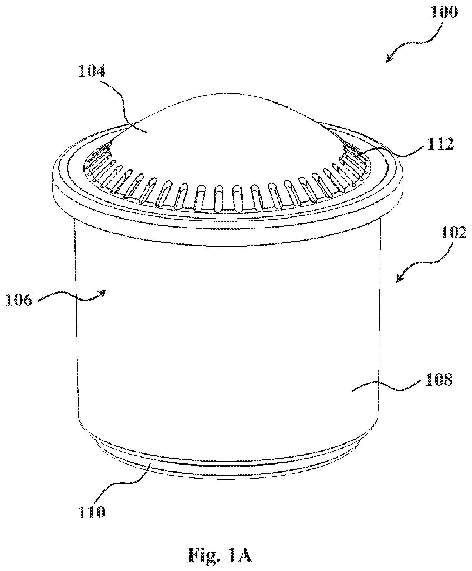

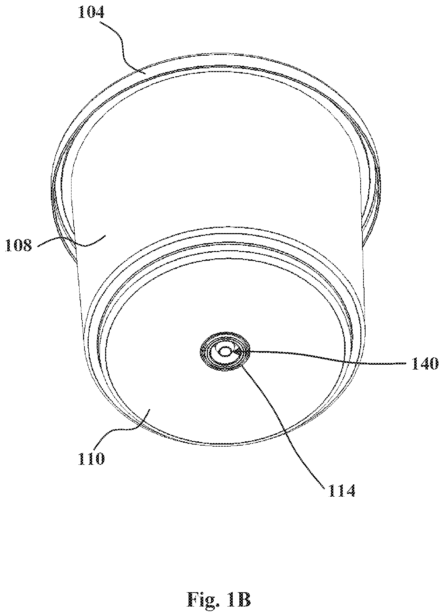

Reference is first being made to **Figs. 1A-1B** showing a water treatment device generally designated **100** including a housing **102** formed by a cover **104** constituting a top wall of the cartridge, and a cup-shaped body **106** fitted thereto. The cup-shaped body can be fitted with the cover by any means known *per-se, e.g.* a snap-type arrangement, a screw-fit arrangement, welding, *etc.* Cup-shaped body comprises an external wall **108** and a bottom wall **110,** constituting the bottom wall of the housing. Defined in the cover **104** are water inlets **112,** which in this specific example are located at a periphery of the top portion of the housing, and are substantially symmetrically distributed in the top wall of the housing to provide for uniform inflow of source water. As can be better seen in Fig. 1B, a water outlet **114** is located substantially at the center of the bottom wall **110.**

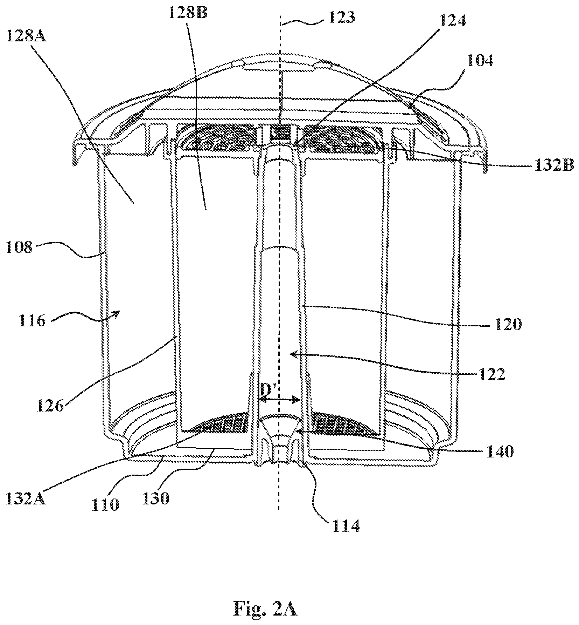

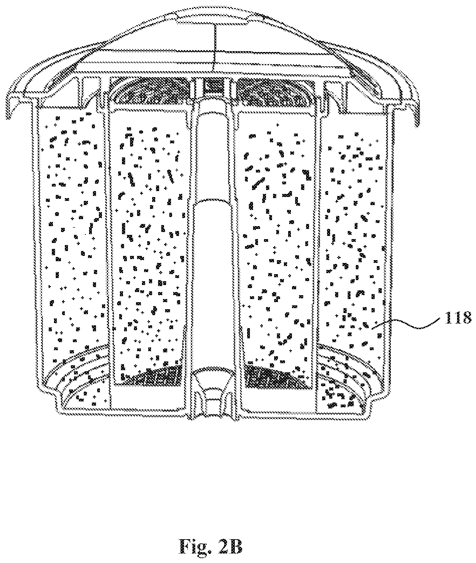

A longitudinal cross-sectional view of the cartridge is shown in **Figs. 2A-2B****,** in which internal elements of the cartridge can be seen. The internal space **116** of the cartridge is typically filled with one or more treatment media **118** (as seen in Fig. 2B). In case particulate treatment media is utilized, cover **104** may be provided at an inward-facing surface thereof with a filtering mesh (not shown), preventing the particulate filtering media from migrating between treatment compartments due to flow of water therethrough. Internal wall **120** extends upwardly from bottom wall **110** into the water treatment space, and defines a lumen **122.** The internal wall **120** circumferences the water outlet **114,** such that the lumen extends along the longitudinal axis **123** of the cartridge. The internal wall **120** terminates at an apex **124** that is located at a lower level than water inlets **112.**

In the exemplified embodiment, the cartridge further comprises a closed-loop wall **126** that extends downwardly into the treatment space from a top wall **112,** and positioned between an external wall **108** of the housing and internal wall **120.** Wall **126** divides the treatment space into concentric first treatment chamber **128A** and second treatment chamber **128B,** each can comprise the same or different treatment media. The closed-loop wall **126** terminates in a bottom edge **130** that is spaced-apart from the bottom wall **110** of the housing to form a water passage between the first and the second treatment chambers, such that a curvilinear flow path from the water inlet to the water outlet is formed. The top and bottom of second treatment chamber **128B** may comprise, although not mandatory, bottom mesh element **132A** and top mesh element **132B** to hold the treatment media in place within chamber **128B,** and prevent its drifting into lumen **122** during flow of water through the cartridge.

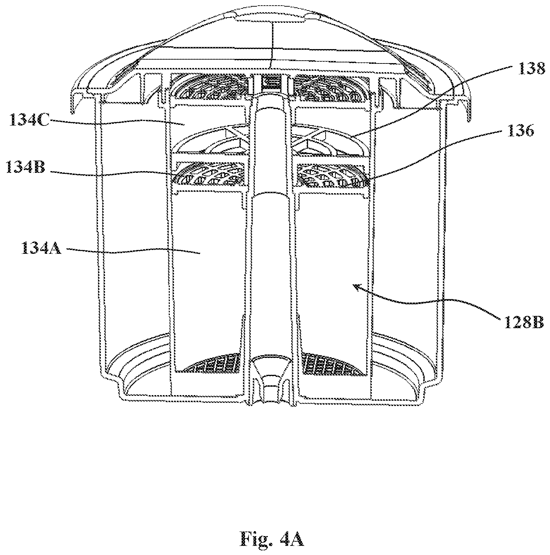

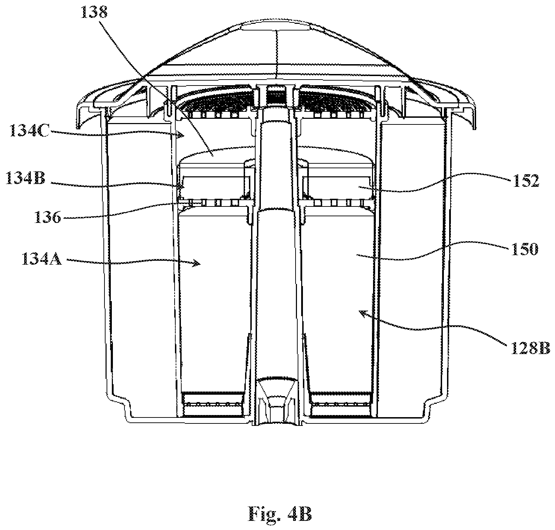

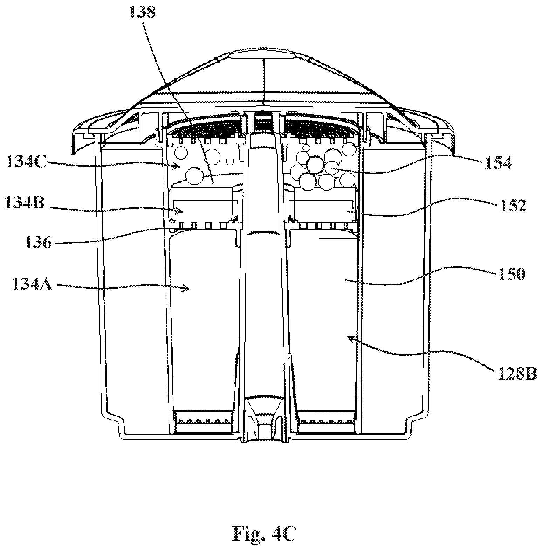

In the embodiment shown in **Figs. 4A-4C****,** the second chamber **128B** is further divided into treatment compartments **134A, 134B** and **134C** by horizontal dividers **136** and **138.** The compartments may comprise the same or different treatment media, as required by the water treatment requirements, depending on the contaminants in the source water or the quality of potable water to be obtained by the treatment. For example, in the configuration of Fig. 4B, treatment compartments **134A** and **134B** may comprise different filtering/treating media **150** and **152,** respectively; while in the configuration of Fig. 4C, each of treatment compartments **134A-134C** comprises different filtering/treating media (**150**, **152** and **154,** respectively). As seen, the treatment medium in each compartment may be of various forms, e.g. a solid block, porous material, fibrous material, particulate matter, *etc.*

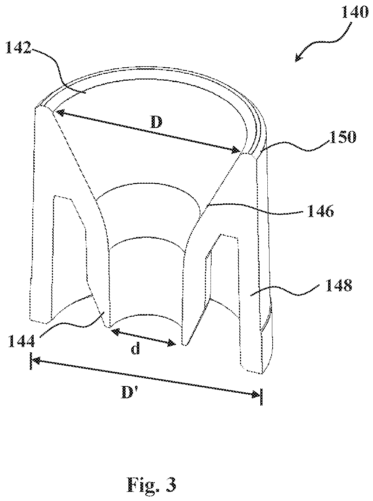

Turning back to Figs. 1A-3, the cartridge comprises a flow restriction element **140** (seen in isolation in **Fig. 3**) fitted at a bottom portion of lumen **122.** The flow restriction element **140** comprises a water ingress **142** with a diameter ***D*** (that substantially corresponds to the diameter ***D'*** of the bottom portion of the lumen), and a water egress **144** having a diameter ***d*** substantially smaller than that of the water ingress. As noted, at the initial feed of source water into the cartridge, water will flow through the inlets **112** into the treatment space and partially wet the treatment media. Treated water will then trickle into the lumen **122.** Due to the narrowing of the outlet **114** formed by the difference in diameters between the ingress **142** and the egress **144,** treated water will be accumulated within the lumen; once a sufficient water column is formed, a steady stream of treated water will then flow out of the cartridge as long as the height of the water column within the lumen is maintained.

The flow restriction element **140** is has a typical conical or frustoconical cross-sectional shape, with an inwardly-slanted wall **146** linking between the ingress (top opening) **142** and the egress (bottom opening) **144.** In order to ensure tight fitting of the flow restriction element **140** within the bottom portion of lumen **120,** element **140** comprises a circumferential skirt **148** extending downwardly from top rim **150,** enveloping the inwardly-slated wall **146,** such that the overall diameter of the flow restriction element is ***D***', thus ensuring tight fit within lumen **122.**

As noted, the flow restriction element **140** can be a stand-alone unit, that can be fitted into the lumen by any means known *per-se* (as shown in **Fig** 2A, not forming part of the current invention). According to the invention, the flow restriction element is an integral part of the housing, *e.g*. integrally formed with the internal wall **120** or the bottom wall **110** (not shown).

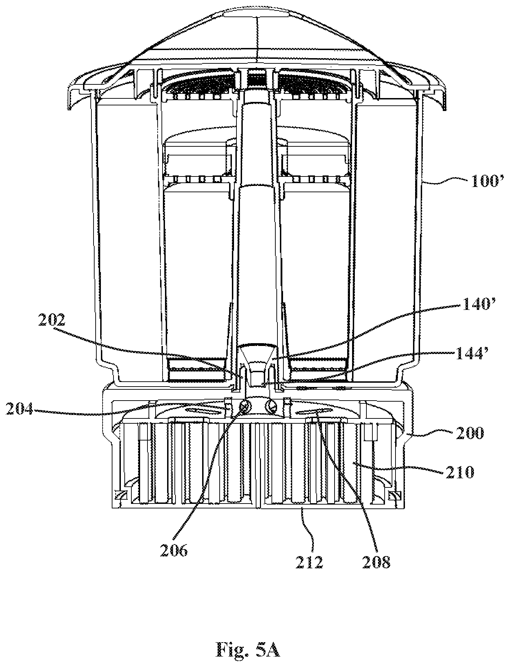

The cartridge may further comprise a supplementary treating unit for providing further water treatment functionalities, as seen in **Figs. 5A-5B****.** Cartridge **100'** in Figs. 5A--5B has the same structural elements as those of the cartridges of Figs. 1A-4C, and the reader is referred to the description of these figures hereinabove for full details.

Cartridge **100'** in Fig. 5A is fitted with supplementary treating unit **200.** The supplementary treating unit 200 comprises a unit inlet **202,** tightly fitted about egress **144'** of the flow restriction unit **140',** such that water flowing out of the egress **144'** enters the supplementary treating unit **200.** Flow diffuser **204** is located below the inlet **202** and comprises openings **206** - flow diffuser **204** functions to direct and diffuse the flow of water received from cartridge **100',** such that the flow of water is substantially evenly distributed along the entire cross section of unit **200,** to trickle into hollow-fiber membrane **210** through orifices **208.** Water is physically treated (*e.g.* filtered) through the hollow-fiber membrane **210** and exit supplementary treating unit **200** through perforations (not shown) formed in the bottom wall **212** of the unit **200.**

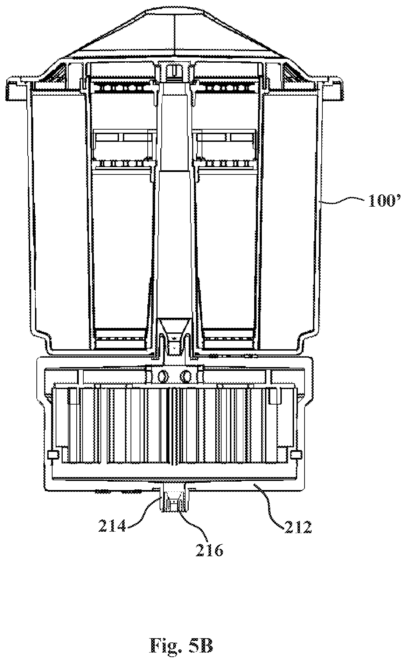

In the configuration of Fig. 5B, the bottom wall **212** of unit **200** includes a central unit outlet **214** (instead of perforations). The unit outlet **214** may be fitted, in this specific example, with a flow restricting unit **216** (which may or may not have a similar structure to that of flow restricting unit **140**).

The cartridge can be utilized in various configurations, either for gravitational based systems or for pressure--feed systems. One example of a gravitational system is a water container or a water pitcher (not shown), which can include an internal wall separating between a source water reservoir and a potable water reservoir. The internal wall can have a cartridge-receiving seat for receiving and holding the cartridge in place, such that the water outlet of the cartridge opens into the potable water reservoir and the one or more water inlets open into the source water reservoir. Thus, source water filled by a user into the source water reservoir enters the cartridge, treated therein to obtain treated/potable water, and is dispensed through the flow restricting element of the cartridge into the treated/potable water reservoir, from which it can be dispensed through the dispensing outlet.

## Claims

1. A water treatment cartridge (100), comprising:
a housing (102), defining therein a water treatment space holding (116) therein one or more water treatment media (118) and having a longitudinal axis, the housing (102) comprising one or more water inlets (112) at a periphery of a top portion of the housing (102) and a water outlet (114) located substantially at the center of a bottom wall (110) of the housing (102), the one or more water inlets (112) and the water outlet (114) defining a water flow path therebetween;
an internal wall (120) circumferring the water outlet (114) and extending upwardly from said bottom wall (110) into the water treatment space (116) to define a lumen (122), the internal wall (120) terminating at an apex (124), the apex (124) being at a lower level than the one or more water inlets (112); and
a flow restriction element (140) integrally formed with the internal wall at a bottom portion of said lumen (122), and having a water ingress (142) substantially corresponding in dimensions to the bottom portion of the lumen (122), and a water egress (144) having dimensions substantially smaller than the water ingress (142), said flow restriction element (140) has a conical or
frustoconical cross-sectional shape with an inwardly-slanted wall (146) linking the water ingress (142) and the water egress (144).

2. The cartridge of claim 1, wherein the flow restriction element (140) is snap-fitted into the bottom portion of the lumen (122). lumen.

3. The cartridge of claim 1, wherein the flow restriction element (140) is integrally formed with the internal wall (120).

4. The cartridge of claim 1, wherein said one or more water inlets (112) are constituted by one or more apertures at the top wall of the housing (102), or wherein said one or more water inlets (112) are symmetrically and equidistantly distributed along the periphery of the top wall of the housing (102) to provide for uniform inlet flow.

5. The cartridge of any of claims 1 to 4, configured for treating source water into potable water.

6. The cartridge of any of claims 1 to 5, wherein the treatment space (116) is divided into two or more treatment chambers (128A, 128B).

7. The cartridge of claim 6, comprising a closed-loop wall (126) downwardly extending into the treatment space (116) from a top wall of the housing (102) and positioned between an external wall of the housing (102) and said internal wall (120) to divide the treatment space (116) into a first treatment chamber (128A) and a second treatment chamber (128B), optionally wherein the closed-loop wall (126) terminates in a bottom edge that is spaced-apart from the bottom wall (110) of the housing (102) to form a water passage between the first and the second treatment chambers (128A, 128B), the closed-loop wall (126) and the internal wall (120) jointly cause the water to flow in a curvilinear flow path from the water inlet (112) to the water outlet (114).

8. The cartridge of claim 6 or 7, wherein each of the treatment chambers (128A, 128B) comprises a different treatment medium.

9. The cartridge of any one of claims 6 to 8, wherein at least one of the first and second treatment chambers (128A, 128B) comprises, independently, one or more horizontal divider elements (136, 138) for dividing the treatment chambers (128A, 128B) into treatment compartments (134A-C).

10. The cartridge of any one of claims 1 to 9, wherein the treatment space (116) comprises one or more water treatment media, one or more sorbing substances, one or more substances having a nutritional or health value and/or having a water-disinfecting activity.

11. The cartridge of any one of claims 1 to 10, comprising a supplementary treating unit (200) comprising one or more hollow-fiber water membrane, fitted about the water egress (144') of the flow restriction element (140'), optionally wherein (i) the supplementary treating unit is removably fitted about the water egress (144') of the flow restriction element (140'), or (ii) the supplementary treating unit (200) is integral with flow restriction element (140').

12. A water container, comprising:
- a bottom potable water reservoir with a dispensing outlet;
- a top source water reservoir;
- an internal wall separating between the source water reservoir and the potable water reservoir and comprising a cartridge-receiving seat; and
- a cartridge according to any one of claims 1 to 11 received in said cartridge-receiving seat, such that the water outlet (114) of the cartridge opens into the potable water reservoir and the one or more water inlets (112) open into the source water reservoir.

13. A method for gravitationally treating source water into potable water, the method comprising:
placing a cartridge according to any one of claims 1 to 11 into the cartridge-receiving seat of the container of claim 12;
at least partially filling the source water reservoir with source water;
permitting the source water to gravitationally flow through the cartridge into the potable water reservoir.

14. A water dispenser comprising a cartridge according to any one of claims 1 to 11.

## Patentansprüche

1. Wasserbehandlungskartusche (100), umfassend:
ein Gehäuse (102), das einen Wasserbehandlungsraum (116) darin definiert, der ein oder mehrere Wasserbehandlungsmedien (118) enthält und eine Längsachse aufweist, das Gehäuse (102) umfassend einen oder mehrere Wassereinlässe (112) an einem Umfang eines oberen Abschnitts des Gehäuses (102) und einen Wasserauslass (114), der im Wesentlichen in der Mitte einer Bodenwand (110) des Gehäuses (102) angeordnet ist, wobei der eine oder die mehreren Wassereinlässe (112) und der Wasserauslass (114) einen Wasserströmungsweg dazwischen definieren;
eine Innenwand (120), die den Wasserauslass (114) umgibt und sich von der Bodenwand (110) nach oben in den Wasserbehandlungsraum (116) erstreckt, um ein Lumen (122) zu definieren, wobei die Innenwand (120) an einem Scheitelpunkt (124) endet, wobei der Scheitelpunkt (124) auf einem niedrigeren Niveau als der eine oder die mehreren Wassereinlässe (112) liegt; und
ein Strömungsbegrenzungselement (140), das einstückig mit der Innenwand an einem Bodenabschnitt des Lumens (122) ausgebildet ist und einen Wassereintritt (142) aufweist, der in seinen Abmessungen im Wesentlichen dem Bodenabschnitt des Lumens (122) entspricht, und einen Wasseraustritt (144), der Abmessungen aufweist, die wesentlich kleiner als die des Wassereintritts (142) sind, wobei das Strömungsbegrenzungselement (140) eine konische oder kegelstumpfförmige Querschnittsform mit einer nach innen abgeschrägten Wand (146) aufweist, die den Wassereintritt (142) und den Wasseraustritt (144) miteinander verbindet.

2. Kartusche nach Anspruch 1, wobei das Strömungsbegrenzungselement (140) in den Bodenabschnitt des Lumens (122) eingerastet ist.

3. Kartusche nach Anspruch 1, wobei das Strömungsbegrenzungselement (140) einstückig mit der Innenwand (120) ausgebildet ist.

4. Kartusche nach Anspruch 1, wobei der eine oder die mehreren Wassereinlässe (112) durch eine oder mehrere Öffnungen an der oberen Wand des Gehäuses (102) gebildet sind, oder wobei der eine oder die mehreren Wassereinlässe (112) symmetrisch und äquidistant entlang des Umfangs der oberen Wand des Gehäuses (102) verteilt sind, um eine gleichmäßige Einlassströmung zu gewährleisten.

5. Kartusche nach einem der Ansprüche 1 bis 4, konfiguriert zum Aufbereiten von Quellwasser zu Trinkwasser.

6. Kartusche nach einem der Ansprüche 1 bis 5, wobei der Behandlungsraum (116) in zwei oder mehr Behandlungskammern (128A, 128B) unterteilt ist.

7. Kartusche nach Anspruch 6, umfassend eine geschlossene Wand (126), die sich von einer oberen Wand des Gehäuses (102) nach unten in den Behandlungsraum (116) erstreckt und zwischen einer Außenwand des Gehäuses (102) und der Innenwand (120) angeordnet ist, um den Behandlungsraum (116) in eine erste Behandlungskammer (128A) und eine zweite Behandlungskammer (128B) zu unterteilen, wahlweise, wobei die geschlossene Wand (126) in einer Bodenkante endet, die von der Bodenwand (110) des Gehäuses (102) beabstandet ist, um einen Wasserdurchgang zwischen den ersten und den zweiten Behandlungskammern (128A, 128B) zu bilden, wobei die geschlossene Wand (126) und die Innenwand (120) gemeinsam bewirken, dass das Wasser in einem gekrümmten Strömungsweg vom Wassereinlass (112) zum Wasserauslass (114) fließt.

8. Kartusche nach Anspruch 6 oder 7, wobei jede der Behandlungskammern (128A, 128B) ein anderes Behandlungsmedium umfasst.

9. Kartusche nach einem der Ansprüche 6 bis 8, wobei mindestens eine der ersten und zweiten Behandlungskammern (128A, 128B) unabhängig voneinander ein oder mehrere horizontale Trennelemente (136, 138) zum Unterteilen der Behandlungskammern (128A, 128B) in Behandlungskompartimente (134A-C) umfasst.

10. Kartusche nach einem der Ansprüche 1 bis 9, wobei der Behandlungsraum (116) ein oder mehrere Wasseraufbereitungsmedien, eine oder mehrere sorbierende Substanzen, eine oder mehrere Substanzen mit einem Ernährungs- oder Gesundheitswert und/oder mit einer wasserdesinfizierenden Aktivität umfasst.

11. Kartusche nach einem der Ansprüche 1 bis 10, umfassend eine zusätzliche Behandlungseinheit (200), die eine oder mehrere Hohlfaser-Wassermembranen umfasst, die um den Wasseraustritt (144') des Strömungsbegrenzungselements (140') angebracht sind, wobei wahlweise (i) die zusätzliche Behandlungseinheit abnehmbar um den Wasseraustritt (144') des Strömungsbegrenzungselements (140') angebracht ist oder (ii) die zusätzliche Behandlungseinheit (200) mit dem Strömungsbegrenzungselement (140') einstückig ausgebildet ist.

12. Wasserbehälter, umfassend:
- einen unteren Trinkwasserspeicher mit einem Ausgabeauslass;
- einen oberen Quellwasserspeicher;
- eine Innenwand, die zwischen dem Quellwasserspeicher und dem Trinkwasserspeicher liegt und einen Kartuschenaufnahmesitz umfasst; und
- eine Kartusche nach einem der Ansprüche 1 bis 11, die in dem Kartuschenaufnahmesitz aufgenommen ist, so dass der Wasserauslass (114) der Kartusche in den Trinkwasserspeicher mündet und der eine oder die mehreren Wassereinlässe (112) in den Quellwasserspeicher münden.

13. Verfahren zum Gravitationsbehandeln von Quellwasser zu Trinkwasser, das Verfahren umfassend:
Einsetzen einer Kartusche nach einem der Ansprüche 1 bis 11 in den Kartuschenaufnahmesitz des Behälters nach Anspruch 12;
Füllen des Quellwasserspeichers mindestens teilweise mit Quellwasser;
Gestatten, dass das Quellwasser gravitationsbedingt durch die Kartusche in den Trinkwasserspeicher fließt.

14. Wasserspender umfassend eine Kartusche nach einem der Ansprüche 1 bis 11.

## Revendications

1. Cartouche de traitement de l'eau (100), comprenant :
un boîtier (102), définissant à l'intérieur de celui-ci un espace de traitement de l'eau contenant (116) à l'intérieur de celui-ci un ou plusieurs milieux de traitement de l'eau (118) et ayant un axe longitudinal, le boîtier (102) comprenant une ou plusieurs entrées d'eau (112) à une périphérie d'une partie supérieure du boîtier (102) et une sortie d'eau (114) située sensiblement au centre d'une paroi inférieure (110) du boîtier (102), les une ou plusieurs entrées d'eau (112) et la sortie d'eau (114) définissant un trajet d'écoulement d'eau entre elles ;
une paroi interne (120) entourant la sortie d'eau (114) et s'étendant vers le haut à partir de ladite paroi inférieure (110) dans l'espace de traitement de l'eau (116) pour définir une lumière (122), la paroi interne (120) se terminant à un sommet (124), le sommet (124) étant à un niveau inférieur à celui des une ou plusieurs entrées d'eau (112) ; et
un élément de restriction d'écoulement (140) formé d'un seul tenant avec la paroi interne au niveau d'une partie inférieure de ladite lumière (122), et ayant une entrée d'eau (142) correspondant sensiblement en dimensions à la partie inférieure de la lumière (122), et une sortie d'eau (144) ayant des dimensions sensiblement inférieures à l'entrée d'eau (142), ledit élément de restriction d'écoulement (140) a une forme transversale conique ou tronconique avec une paroi inclinée vers l'intérieur (146) reliant l'entrée d'eau (142) et la sortie d'eau (144).

2. Cartouche selon la revendication 1, dans laquelle l'élément de restriction d'écoulement (140) est encliqueté dans la partie inférieure de la lumière (122).

3. Cartouche selon la revendication 1, dans laquelle l'élément de restriction d'écoulement (140) est formé d'un seul tenant avec la paroi interne (120).

4. Cartouche selon la revendication 1, dans laquelle lesdites une ou plusieurs entrées d'eau (112) sont constituées par une ou plusieurs ouvertures au niveau de la paroi supérieure du boîtier (102), ou dans laquelle lesdites une ou plusieurs entrées d'eau (112) sont réparties de manière symétrique et équidistante le long de la périphérie de la paroi supérieure du boîtier (102) pour assurer un flux d'entrée uniforme.

5. Cartouche selon l'une quelconque des revendications 1 à 4, configurée pour traiter l'eau de source en eau potable.

6. Cartouche selon l'une quelconque des revendications 1 à 5, dans laquelle l'espace de traitement (116) est divisé en deux chambres de traitement (128A, 128B) ou plus.

7. Cartouche selon la revendication 6, comprenant une paroi en boucle fermée (126) s'étendant vers le bas dans l'espace de traitement (116) à partir d'une paroi supérieure du boîtier (102) et positionnée entre une paroi externe du boîtier (102) et ladite paroi interne (120) pour diviser l'espace de traitement (116) en une première chambre de traitement (128A) et une seconde chambre de traitement (128B), éventuellement dans laquelle la paroi en boucle fermée (126) se termine par un bord inférieur qui est espacé de la paroi inférieure (110) du boîtier (102) pour former un passage d'eau entre les première et seconde chambres de traitement (128A, 128B), la paroi en boucle fermée (126) et la paroi interne (120) provoquent conjointement l'écoulement de l'eau dans un trajet d'écoulement curviligne depuis l'entrée d'eau (112) vers la sortie d'eau (114).

8. Cartouche selon la revendication 6 ou 7, dans laquelle chacune des chambres de traitement (128A, 128B) comprend un milieu de traitement différent.

9. Cartouche selon l'une quelconque des revendications 6 à 8, dans laquelle au moins l'une des première et seconde chambres de traitement (128A, 128B) comprend, indépendamment, un ou plusieurs éléments diviseurs horizontaux (136, 138) pour diviser les chambres de traitement (128A, 128B) en compartiments de traitement (134A-C).

10. Cartouche selon l'une quelconque des revendications 1 à 9, dans laquelle l'espace de traitement (116) comprend un ou plusieurs milieux de traitement de l'eau, une ou plusieurs substances absorbantes, une ou plusieurs substances ayant une valeur nutritionnelle ou sanitaire et/ou ayant une activité désinfectante de l'eau.

11. Cartouche selon l'une quelconque des revendications 1 à 10, comprenant une unité de traitement supplémentaire (200) comprenant une ou plusieurs membranes d'eau à fibres creuses, montées autour de la sortie d'eau (144') de l'élément de restriction d'écoulement (140'), éventuellement dans laquelle (i) l'unité de traitement supplémentaire est montée de manière amovible autour de la sortie d'eau (144') de l'élément de restriction d'écoulement (140'), ou (ii) l'unité de traitement supplémentaire (200) est solidaire de l'élément de restriction d'écoulement (140').

12. Récipient à eau, comprenant :
- un réservoir d'eau potable inférieur avec une sortie de distribution ;
- un réservoir d'eau de source supérieur ;
- une paroi interne séparant le réservoir d'eau de source et le réservoir d'eau potable et comprenant un siège de réception de cartouche ; et
- une cartouche selon l'une quelconque des revendications 1 à 11 reçue dans ledit siège de réception de cartouche, de telle sorte que la sortie d'eau (114) de la cartouche s'ouvre dans le réservoir d'eau potable et les une ou plusieurs entrées d'eau (112) s'ouvrent dans le réservoir d'eau de source.

13. Procédé de traitement gravitationnel de l'eau de source en eau potable, le procédé comprenant :
le placement d'une cartouche selon l'une quelconque des revendications 1 à 11 dans le siège de réception de cartouche du récipient selon la revendication 12 ;
le remplissement au moins partiel du réservoir d'eau de source avec de l'eau de source ;
le fait de permettre à l'eau de source de s'écouler par gravité à travers la cartouche dans le réservoir d'eau potable.

14. Distributeur d'eau comprenant une cartouche selon l'une quelconque des revendications 1 à 11.
